# EUROPEAN PATENT SPECIFICATION

(11) **EP 2 913 555 B1**
(45) Date of publication and mention of the grant of the patent: **04.05.2016**
(21) Application number: 14156871.7
(22) Date of filing: 26.02.2014
(51) Int. Cl.: F16F 15/34

(54) **Linked clip-on balancing weights for vehicles**
Aufklemmbare Ausgleichsgewichte für Fahrzeuge
Poids d'équilibrage à pinces chaînées pour véhicules

(43) Date of publication of application: 02.09.2015
(73) Proprietor: WEGMANN automotive GmbH & Co. KG, 97209 Veitshöchheim (DE)
(72) Inventor: Hornung, Thomas, 97072 Würzburg (DE)
(74) Representative: Lohr, Georg

(56) References cited:
- EP-B1- 1 248 014
- WO-A1-2013/127945
- FR-A- 755 447
- GB-A- 284 234
- US-A- 4 728 154

## Description

### Field of the invention

The invention relates to clip on balancing weights, which may be attached to the rim of a wheel of a vehicle for balancing the wheel.

### Description of the related art

Clip-on balancing weights as disclosed in the US patent 4,728,154 have a body of a metal providing mass and a clip to hold the balancing weight to the rim of a wheel. For balancing wheels, typically at broad range of different masses of balancing weights is required. Therefore, different balancing weights must be kept on stock.

US patent 4,379,596 discloses a modular balancing weight, where additional masses can be inserted into a holder. The additional masses must be secured by an adhesive tape. The holder has no plain surface and therefore may collect dust and debris during use. This causes the balancing weight to get an unattractive appearance.

A further modular clip-on balancing weight is disclosed in WO 2013/127945 A1. There is a plurality of balancing weight segments, which are manufactured as one piece. The desired length or the desired number of pieces must be selected and cut off a string of balancing weights before use.

A modular self-adhesive balancing weight is disclosed in EP 1 248 014 B1. Here, the handling of balancing weights is simplified, as the balancing weights are held at equal distances to each other by a spacing member. Once they are attached to the rim, they are held by an adhesive tape.

### Summary of the invention

The problem to be solved by the invention is to provide modular clip-on balancing weights, which can be adapted to a broad variety of mass requirements. The balancing weights should allow a reliable and long-term stable fixation to a rim of a wheel. The balancing weights should be prepared for automated processing by handling systems.

Solutions of the problem are described in the independent claims. The dependent claims relate to further improvements of the invention.

A plurality of balancing weights are connected to each other by a connecting means, thus forming a string of balancing weights, preferably having a chained or belt like structure. Therefore, a plurality of balancing weights can be selected from a longer string of balancing weights according to the mass required. Clip-on balancing weights do not require support by an adhesive tape. Instead, they are held by a clip to a rim. Preferably, there should be only one clip per balancing mass comprising a plurality of balancing weights. It is not desired to attach an individual clip to each balancing weight, as this is too complex and produces an undesirable appearance. Therefore, the balancing weights should be interconnected such, that all forces that apply to balancing weights at a wheel are transferred to a single balancing weight, which is held by a clip to the rim of a wheel. Balancing weights are mounted to the inner side of the rim of a wheel, resulting in a convex bending. A string of balancing weights, which is bent preferably, has a restoring force to form a straight line or at least to significantly reduce the bending radius. This allows fixing a center balancing weight of a string of balancing weights to a rim. The other balancing weights are pressed against the rim by the restoring force. Preferably, the connecting means acts like a spring trying to keep the balancing weights in a straight line and therefore asserting restoring force, when it is forced to an arc. It may also be possible to use a connecting means, which has none-elastic properties and therefore may be bent into the desired radius before attaching it with a clip to a rim. Preferably, the both characteristics are combined, allowing pre-bending the balancing weights approximately to the correct radius by maintaining a larger radius than the actual rim has. This generates some restoring force, after the balancing weights have been attached by a clip. Most preferably, the restoring force is generated by an elastic connecting means in conjunction with a lever system. The individual balancing weights are mounted close to each other. Due to bending of the string of balancing weights, the gap gets a wedge shape. At least two adjacent balancing weights contact each other and form a lever asserting tension in a longitudinal direction to the connecting means. Due to the lever, the connecting means is not only bent, but also exposed to a significant tension. Therefore, the connecting means does not primarily react to bending forces, but to tensile forces. This results in a significantly higher stiffness and therefore in a significantly higher restoring force, pressing the balancing weights, which are not held by a clip against the rim.

It is further preferred, to have a spacer between adjacent balancing weights to further increase the restoring force. Preferably, the spacer comprises a material with elastic and/or plastic properties. This material may be a plastic or rubber material. It may also be a spring, which may be formed from a piece of metal.

Preferably, the connecting means has a specific color, which may be selected for design reasons or for encoding a specific type, manufacturer, material or size of balancing weights. Furthermore, the spacer may have a specific color, which may be the same as the color of the connecting means or different. It may encode any further information or may provide a specific code with the colour of the connecting means. Connecting means and/or spacer may have a color similar to the color of the balancing weights to be unremarkable.

The balancing weights have a bottom side, which is intended to fit to the surface of the rim. For further increasing the adhesive strength to the rim, a self adhesive tape may be provided at the bottom side. Opposing thereto is a top side, which may be designed to hold or guide a clip. Preferably, the balancing weights have at least one recess or notch at the top side, which may interact with a protrusion of the clip. This may prevent moving or slipping sideward of the balancing weight relative to the clip. Within the balancing weight is at least one channel for guiding the connecting means going through the balancing weights. This channel may be open to the bottom side, allowing easy insertion of the connecting means. As this channel is not visible, when the balancing weight has been mounted to a rim, this does not affect the outer appearance of the balancing weight.

The connecting means may be of any material suitable for holding the balancing weights at a location at the rim. Furthermore, the material should be long-term stable. Most preferably, it is a metal like steel. It may also be a plastic material like PE or PP, preferably fiber reinforced. It is further preferred, if the connecting means may not only be bent in a first plane approximately parallel to the bottom side, and therefore approximately parallel to the surface of the rim, to adapt the chain of balancing weights to the radius of the rim, but in a second plane perpendicular to the first plane to allow forming a roll or coil of balancing weights. Such a roll or coil would simplify storage and handling of the balancing weights.

### Description of Drawings

In the following, the invention will be described by way of example, without limitation of the general inventive concept, on examples of embodiment with reference to the drawings.
- Figure 1: shows balancing weights mounted to a rim in a top view.
- Figure 2: shows balancing weights mounted to a rim in a side view.
- Figure 3: shows a string of balancing weights connected by a connecting means in a top view.
- Figure 4: shows a balancing weight in a sectional view.
- Figure 5: shows a coil of balancing weights.
- Figure 6: shows an enlarged sectional view of figure 3.
- Figure 7: shows an enlarged sectional view of figure 1.
- Figure 8: shows an embodiment with a spacer in top view.
- Figure 9: shows embodiment with a spacer in a side view.

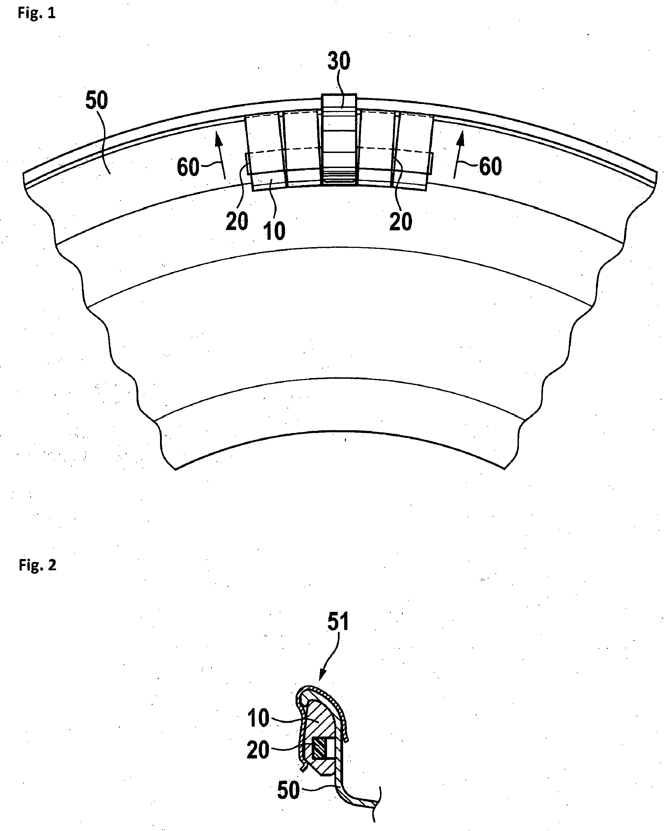

In figure 1, balancing weights 10 mounted to a rim 50 are shown in a top view. In this example, 5 balancing weights are shown. It is obvious that any other number of balancing weights may be used. Here, the center balancing weight is held by a clip (spring clip) to the rim. The balancing weights are connected by a connecting means 20. Was connecting means 20 holds the outer balancing weights, distant from the balancing weight, held by a clip, in their position close to the edge 51 of the rim. Preferably, the connecting means 20 acts as a spring, asserting forces as indicated by arrows 60 to press the outer balancing weights against the edge of the rim.

In figure 2, balancing weights 10, mounted to a rim 50 are shown in a side view.

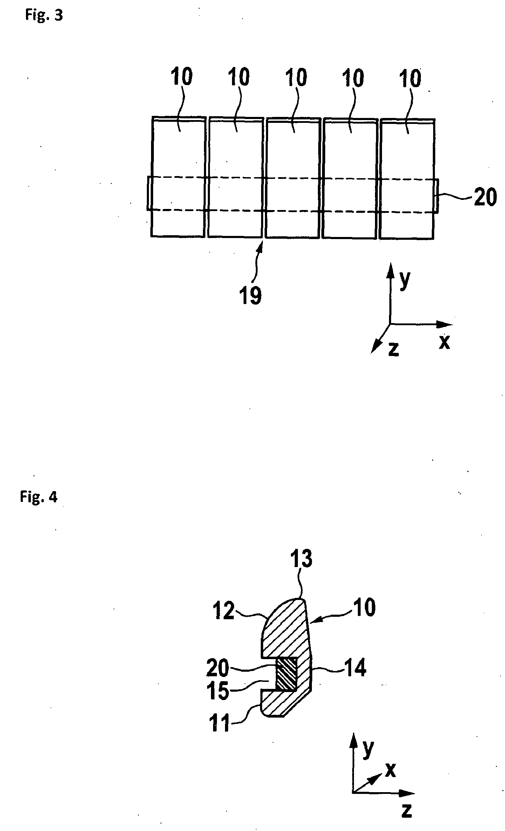

In figure 3, a string of balancing weights 10 connected by a connecting means 20 is shown in a top view. There are gaps 19 between the individual balancing weights. To obtain a maximum restoring force (a counterforce with in the x-z plane), these gaps should be very small. With standard balancing weights, a gap of 1mm or below is preferred. Furthermore, the connecting means 20 preferably has elastic or spring characteristics to generate a counter force within the x-y plane if bent within this plane. It is further preferred, if the balancing weights may also be bent in the plane x-z for forming a roll. It is further preferred, if the balancing weights generate if bent within this plane.

In figure 4, a balancing weight is shown in a sectional view. The balancing weight has a bottom side 11, a slope 12 and a backside 13 which are adapted to fit to the surface of a rim. Approximately opposing to the bottom side is a top side 14, which is adapted to hold a clip. The bottom side 11 is attached to a mounting surface of the rim and therefore it is parallel thereto. Within the balancing weight is a channel 15 for holding the connecting means 20. This channel 15 may be open towards the bottom side 11 to simplify insertion of the connecting means. The connecting means may be held by press-fit, hot-melt, glue or any other means within the channel. Preferably, the channel has at least one sidewall having protrusions for increasing the holding force to the connecting means. Most preferably, there are protrusions at two opposing sidewalls.

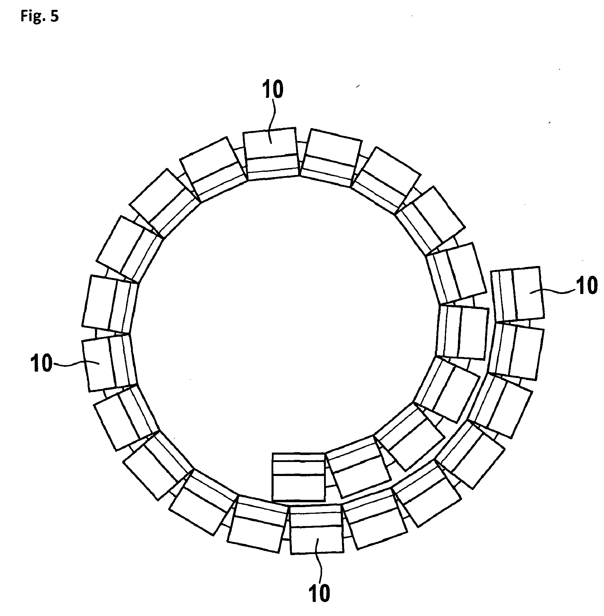

In figure 5, a coil of balancing weight is shown. Winding of the balancing weights to a coil in the plane x-z of figure 3 (perpendicular to the bending direction at a rim) allows for easier handling, transportation and for automatic processing for example by robots.

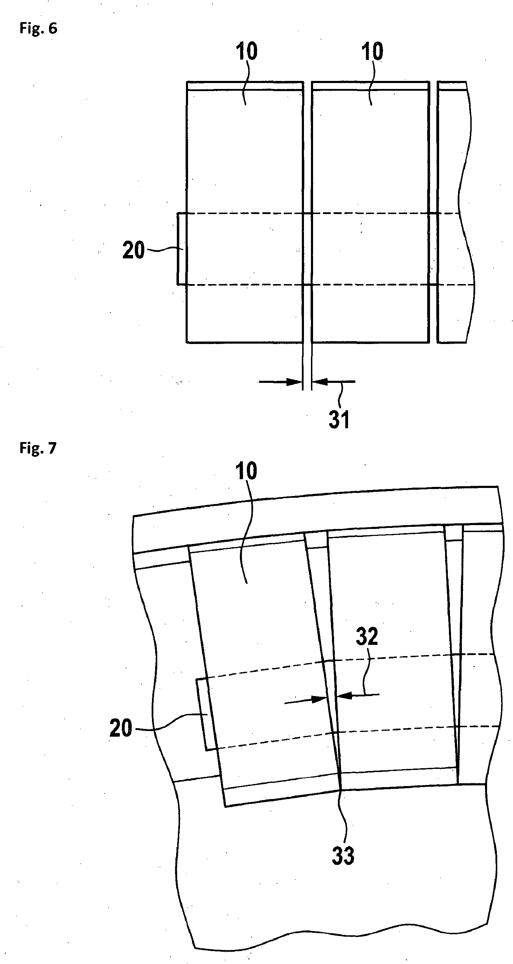

In figure 6, an enlarged sectional view of figure 3 is shown. This figure shows the string of balancing weights in a straight state, before mounting them to a rim. There may be a small gap having a width 31 between adjacent and approximately parallel balancing weights. Preferably, the gap is 1mm or less.

In figure 7, an enlarged sectional view of figure 1 is shown. This figure shows the string of balancing weights in a bent state, after mounting them to a rim. Due to bending of the string of balancing weights, the gap has a wedge shape. Two adjacent balancing weights contact each other at a contacting point 33, which is preferably at the corners of the balancing weights, and form a lever asserting tension in a longitudinal direction to the connecting means 20. Due to the lever, the connecting means 20 is not only bent, but also exposed to a significant tension, which is approximately parallel to the arrows 32. The mean length 32 of the connecting means 20 between the balancing weights is larger than the width of the gap 31 before mounting. Therefore, the connecting means 20 does not primarily react to bending forces, but to tensile forces. This results in a significantly higher stiffness and therefore in a significantly higher restoring force, pressing the balancing weights, which are not held by a clip against the rim. Applying this concept allows to use smaller connecting means 20 and/or connecting means 20 made of a less expensive material. Instead of using a steel wire as connecting means, it is now possible to use a plastic rod or plastic profile. By adjusting the gap 31 between the balancing weights and the shape of the sidewalls of the balancing weights, the restoring force may be adjusted.

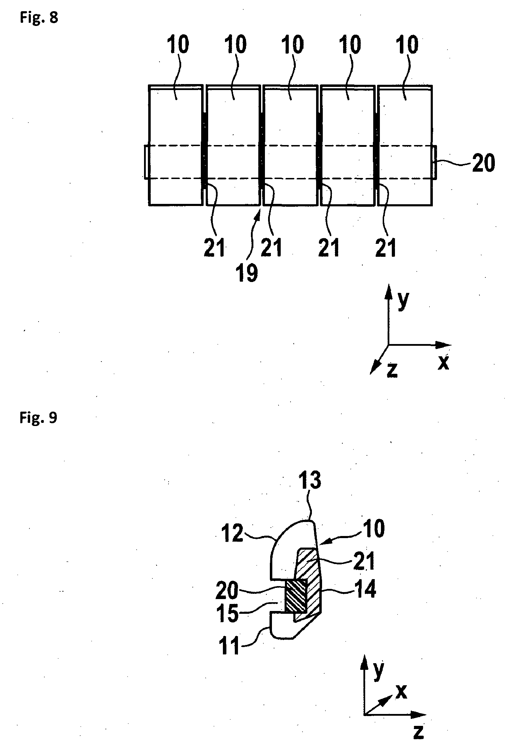

Figure 8 shows an embodiment with a spacer 21 in top view. Spacers are located between adjacent balancing weights to increase the force pressing the balancing weights to a rim. There may be a spacer in every gap between balancing weights. In other embodiments, there may only be a spacer in each second, third, etc. gap.

Figure 9 shows an embodiment with a spacer 21 in a side view. Preferably, the spacer is arranged close to the top side 14 to generate a force against the rim. Whereas the connecting means generates a significant force against bending the chain of balancing weights around the z-axis, the spacer may generate an additional force against bending the balancing weights around the y-axis. This causes the chain of balancing weights to stay in close contact with the rim. Bending of balancing weight off from the ring is hardly possible. Furthermore, the spacer may support the force generated by the connecting means. It may generate pressure between adjacent balancing weights and it may further increase the distance between adjacent balancing weights at the contacting point of balancing weights 33, which may cause a further extension of the connecting means, generating further counter force.

### List of reference numerals

- 10: balancing weight
- 11: bottom side
- 12: slope
- 13: back side
- 14: top side
- 15: channel
- 19: gap between balancing weights
- 20: connecting means
- 21: spacer
- 31: width of gap between adjacent balancing weights before mounting
- 32: width of gap between adjacent balancing weights after mounting
- 33: contacting point of balancing weights
- 50: rim

## Claims

1. Chain of balancing weights (10) for a rim (50) of a wheel of a vehicle, comprising of a plurality of balancing weights, each balancing weight having
- a bottom side (11) being adapted to fit to the rim (50) and defining a first plane (x-y),
- a top side (14) opposing the bottom side, the top side being adapted to hold a spring clip,
- at least one channel (15), and
at least one connecting means (20) is provided through the channel (15) of each balancing weight, interconnecting the balancing weights,
**characterized in, that**
the at least one connecting means (20) has spring elastic properties and generates a restoring force when bent within the first plane, and the sidewalls of at least two adjacent balancing weights contact each other when mounted to a rim and form a lever asserting tension in a longitudinal direction to the connecting means.

2. Chain of balancing weights according to claim 1,
**characterized in, that**
the at least one connecting means (20) generates a lower restoring force when bent within a second plane (x-z) perpendicular to the first plane.

3. Chain of balancing weights according to claim 1 or 2,
**characterized in, that**
the channel (15) is open to the bottom side.

4. Chain of balancing weights according to any one of the previous claims,
**characterized in, that**
the chain of balancing weights can be bent to a roll.

5. Chain of balancing weights according to any one of the previous claims,
**characterized in, that**
the balancing weights have at least one recess or notch at the top side, which may interact with a protrusion of a clip.

6. Chain of balancing weights according to any one of the previous claims,
**characterized in, that**
at least one spacer (21) is between adjacent balancing weights.

7. Chain of balancing weights according claim 6,
**characterized in, that**
the spacer (21) comprises a plastic or rubber material.

8. Chain of balancing weights according claim 6,
**characterized in, that**
the spacer (21) comprises a metal spring.

9. Chain of balancing weights according to any one of the claims 6 to 8,
**characterized in, that**
the spacer (21) has a specific color encoding the type of balancing weight.

10. Chain of balancing weights according to any one of the previous claims,
**characterized in, that**
the connecting means (20) has a specific color encoding the type of balancing weight.

## Patentansprüche

1. Kette von Auswuchtgewichten (10) für eine Felge (50) eines Fahrzeugrades, umfassend eine Vielzahl von Auswuchtgewichten, wobei jedes Auswuchtgewicht Folgendes aufweist:
- eine Unterseite (11), welche angepasst ist, um auf die Felge (50) zu passen und eine erste Ebene (x-y) zu definieren,
- eine der Unterseite gegenüberliegende Oberseite (14), wobei die Oberseite angepasst ist, eine Federklammer zu halten,
- wenigstens einen Kanal (15), und
mindestens ein Verbindungsmittel (20) durch den Kanal (15) von jedem Auswuchtgewicht bereitgestellt ist, welches die Auswuchtgewichte miteinander verbindet,
**dadurch gekennzeichnet, dass**
das mindestens eine Verbindungsmittel (20) federelastische Eigenschaften hat und eine Rückstellkraft erzeugt, wenn es innerhalb der ersten Ebene gebogen wird, und die Seitenwände von mindestens zwei benachbarten Auswuchtgewichten einander berühren, wenn sie an einer Felge angebracht sind, und einen Hebel bilden, der Spannung in einer Längsrichtung zu den Verbindungsmitteln bewirkt.

2. Kette von Auswuchtgewichten gemäß Anspruch 1,
**dadurch gekennzeichnet, dass**
das mindestens eine Verbindungsmittel (20) eine niedrigere Rückstellkraft erzeugt, wenn es innerhalb einer zweiten, zur ersten Ebene senkrecht stehenden Ebene (x-z) gebogen wird.

3. Kette von Auswuchtgewichten gemäß Anspruch 1 oder 2,
**dadurch gekennzeichnet, dass**
der Kanal (15) an der Unterseite offen ist.

4. Kette von Auswuchtgewichten gemäß einem der vorhergehenden Ansprüche,
**dadurch gekennzeichnet, dass**
die Kette von Auswuchtgewichten zu einer Rolle gebogen werden kann.

5. Kette von Auswuchtgewichten gemäß einem der vorhergehenden Ansprüche,
**dadurch gekennzeichnet, dass**
die Auswuchtgewichte mindestens eine Ausnehmung oder Kerbe auf der Oberseite haben, welche mit einem Vorsprung einer Klammer zusammenwirken kann.

6. Kette von Auswuchtgewichten gemäß einem der vorhergehenden Ansprüche,
**dadurch gekennzeichnet, dass**
zumindest ein Abstandhalter (21) sich zwischen benachbarten Auswuchtgewichten befindet.

7. Kette von Auswuchtgewichten nach Anspruch 6,
**dadurch gekennzeichnet, dass**
der Abstandhalter (21) ein Kunststoff- oder Gummimaterial umfasst.

8. Kette von Auswuchtgewichten nach Anspruch 6,
**dadurch gekennzeichnet, dass**
der Abstandhalter (21) eine Metallfeder umfasst.

9. Kette von Auswuchtgewichten gemäß einem der Ansprüche 6 bis 8,
**dadurch gekennzeichnet, dass**
der Abstandhalter (21) eine bestimmte Farbe hat, die den Typ von Auswuchtgewicht codiert.

10. Kette von Auswuchtgewichten gemäß einem der vorhergehenden Ansprüche,
**dadurch gekennzeichnet, dass**
das Verbindungsmittel (20) eine bestimmte Farbe hat, die den Typ von Auswuchtgewicht bezeichnet.

## Revendications

1. Une chaîne de masses d'équilibrage (10) pour une jante (50) d'une roue d'un véhicule, comprenant une pluralité de masses d'équilibrage, chaque masse d'équilibrage ayant
- un côté inférieur (11) étant adapté pour correspondre à la jante (50) et définissant un premier plan (x-y),
- un côté supérieur (14) à l'opposé du côté inférieur, le côté supérieur étant adapté pour tenir une pince à ressort,
- au moins un canal (15), et
Au moins un moyen de connexion (20) est fourni au travers du canal (15) de chaque masse d'équilibrage, interconnectant les masses d'équilibrage,
**Caractérisé en ce que**
Au moins un moyen de connexion (20) possède des propriétés élastiques de ressort et génère une force de restauration lorsqu'il est plié dans le premier plan, et les parois latérales d'au moins deux masses d'équilibrage adjacentes sont en contact l'une avec l'autre lorsqu'elles sont montées sur une jante et forment un levier exerçant une tension dans un sens longitudinal par rapport au moyen de connexion.

2. Une chaîne de masses d'équilibrage selon la revendication 1,
**Caractérisée en ce que**
Au moins un moyen de connexion (20) génère une force de restauration inférieure lorsqu'il est plié dans un deuxième plan (x-z) perpendiculaire au premier plan.

3. Une chaîne de masses d'équilibrage selon la revendication 1 ou 2,
**Caractérisée en ce que**
Le canal (15) est ouvert sur le côté inférieur.

4. Une chaîne de masses d'équilibrage selon l'une des revendications précédentes,
**Caractérisée en ce que**
La chaîne de masses d'équilibrage puisse être pliée en un rouleau.

5. Une chaîne de masses d'équilibrage selon l'une des revendications précédentes,
**Caractérisée en ce que**
Les masses d'équilibrage possèdent au moins un creux ou une entaille sur le côté supérieur, qui peuvent interagir avec une saillie d'une pince.

6. Une chaîne de masses d'équilibrage selon l'une des revendications précédentes,
**Caractérisée en ce que**
Au moins une entretoise (21) se trouve entre des masses d'équilibrage adjacentes.

7. Une chaîne de masses d'équilibrage selon la revendication 6,
**Caractérisée en ce que**
L'entretoise (21) comprend une matière plastique ou caoutchouc.

8. Une chaîne de masses d'équilibrage selon la revendication 6,
**Caractérisée en ce que**
L'entretoise (21) comprend un ressort en métal.

9. Une chaîne de masses d'équilibrage selon l'une revendications 6 à 8,
**Caractérisée en ce que**
L'entretoise (21) possède une couleur spécifique codant le type de masse d'équilibrage.

10. Une chaîne de masses d'équilibrage selon l'une des revendications précédentes,
**Caractérisée en ce que**
Le moyen de connexion (20) possède une couleur spécifique codant le type de masse d'équilibrage.
